# EUROPEAN PATENT APPLICATION

(11) **EP 4 202 426 A1**
(43) Date of publication of application: **28.06.2023**
(21) Application number: 21217881.8
(22) Date of filing: 27.12.2021
(51) Int. Cl.: G01N 23/20058

(54) **METHOD AND PREPARATION FOR USE OF POROUS SINGLE CRYSTALS IN STRUCTURE ELUCIDATION OF A MOLECULE WITH ELECTRON DIFFRACTION**

(71) Applicant: Merck Patent GmbH, 64293 Darmstadt (DE)
(72) Inventor: KUEHN, Clemens, 64293 Darmstadt (DE)
(74) Representative: Merck Serono S.A. Intellectual Property

(57) **Abstract**

The invention provides a sample holding arrangement (1) comprising a sample holding part (3) and a connector part (4), wherein: the sample holding part (3) comprises a collection chamber (100) having an interior space (101); wherein the interior space (101) hosts one or more single crystals of a porous framework (20); wherein the one or more single crystals of the porous framework (20) have a spherically equivalent diameter ≤ 10 µm; wherein the interior space (101) is configured for receiving an analyte (5); and the connector part (4) is functionally coupled to the sample holding part (3); wherein the connector part (4) is configured for functionally coupling the sample holding part (3) to an electron diffraction sample support (30), wherein the electron diffraction sample support (30) and the one or more single crystals of the porous framework (20) are in fluid contact when the sample holding part (3) and the electron diffraction sample support (30) are functionally coupled by the connector part (4).

## Description

### FIELD OF THE INVENTION

The invention relates to a sample holding arrangement. The invention further relates to a kit of parts. The invention further relates to a sample preparation method. The invention further relates to an electron diffraction analysis method. The invention further relates to a system.

### BACKGROUND OF THE INVENTION

Methods for determining molecular structure of a compound to be analyzed using porous frameworks as well as sample holders for such porous frameworks are known in the art. EP3269849A1, e.g., describes a single crystal of a porous compound, the single crystal being used to produce a crystal structure analysis sample for a compound to be analyzed by contacting the single crystal of the porous compound having a three-dimensional framework and three-dimensionally regularly-arranged pores and/or hollows formed by being divided by the three-dimensional framework with a solution that includes the compound to be analyzed, and arranging molecules of the compound to be analyzed in a regular array in the pores and/or hollows.

### SUMMARY OF THE INVENTION

Molecule structure elucidation may make use of a crystalline porous network or a crystalline sponge. A single crystal suited for structure elucidation may be infused with the molecule to be analyzed and can then be structurally characterized, for instance by conventional crystallography, thus elucidating the structure of the analyte.

Prior art crystallography approaches, such as X-ray crystallography, may however, require a relatively large amount of sample.

The prior art may describe further technologies, such as electron diffraction, which may provide structural information on a comparable level and - compared to X-ray crystallography - based on a much smaller crystal of the sample. This means, however, that even for electron diffraction, it is necessary to crystallize a sample.

In particular, the crystalline porous networks with infused analytes described in the prior art may not be compatible with electron diffraction approaches, such as in view of the crystal sizes and in view of the sample holders on which samples are provided. For instance, Electron diffraction may generally involve crystals below 1 µm in size, typically 100-200 nm. However crystals of that size may no longer be conveniently and accurately manipulated with manual tools under a microscope, presenting a major hurdle in isolating and preparing a suitable single crystal and collecting high quality datasets as necessary for structure elucidation.

Furthermore, electron diffraction systems may generally not be configured to provide suitable conditions for the analysis of crystalline porous frameworks with infused analytes. For instance, the crystalline porous frameworks with infused analytes may be unstable under the operational conditions of such systems.

Hence, it is an aspect of the invention to provide an alternative sample preparation method, and system, which preferably further at least partly obviate one or more of above-described drawbacks. The present invention may have as object to overcome or ameliorate at least one of the disadvantages of the prior art, or to provide a useful alternative.

Hence, in a first aspect, the invention may provide a sample holding arrangement comprising a sample holding part and a connector part. In embodiments, the sample holding part may comprise a collection chamber having an interior space. The interior space may (be configured to) host one or more single crystals of a porous framework, especially wherein the one or more single crystals of the porous framework have a spherically equivalent diameter ≤ 10 µm. In particular, the interior space may be configured for receiving an analyte. In further embodiments, the connector part may be configured for functionally coupling to the sample holding part, especially wherein the connector part is functionally coupled to the sample holding part. In embodiments, the connector part may be configured for functionally coupling the sample holding part to an electron diffraction sample support (or "ED sample support"). The ED sample support may especially comprise an electron diffraction grid (or "ED grid"). In further embodiments, the electron diffraction sample support and the one or more single crystals of the porous framework may be in fluid contact when the sample holding part and the electron diffraction sample support are functionally coupled by the connector part.

The sample holding arrangement of the invention may provide the benefit that samples suitable for electron diffraction analysis can be conveniently prepared. In particular, the sample holding arrangement may facilitate soaking of the one or more single crystals to provide an analyte into the one or more single crystals to yield a prepared sample comprising one or more single crystals of a porous framework doped with analyte, and may facilitate providing the one or more (doped) single crystals to an electron diffraction sample support, especially onto an electron diffraction grid, suitable for subsequent electron diffraction analysis.

Hence, in specific embodiments, the invention may provide a sample holding arrangement comprising a sample holding part and a connector part, wherein the sample holding part comprises a collection chamber having an interior space, wherein the interior space hosts one or more single crystals of a porous framework, wherein the one or more single crystals of the porous framework have a spherically equivalent diameter ≤ 10 µm, and wherein the interior space is configured for receiving an analyte; and wherein the connector part is configured to functionally couple to the sample holding part, wherein the connector part is configured for functionally coupling the sample holding part to an electron diffraction sample support, wherein the electron diffraction sample support and the one or more single crystals of the porous framework are in fluid contact when the sample holding part and the electron diffraction sample support are functionally coupled by the connector part.

Hence, the invention may provide a sample holding arrangement (or "sample holder arrangement). The sample holding arrangement may in embodiments be configured for preparing a (prepared) sample, especially on an electron diffraction sample support, thus providing a prepared electron diffraction sample support, which may be used in an electron diffraction method. The prepared sample may be prepared by providing an analyte to an interior space of the sample holder arrangement, especially wherein either the interior space already comprised a (first) solvent and/or wherein the analyte is provided in a (second) solvent. The sample holding arrangement may facilitate soaking the one or more single crystals of the porous framework in the solvent with the analyte in order to introduce the analyte into (at least part of) the one or more single crystals of the porous framework, and may facilitate transferring the one or more single crystals of the porous framework to an ED sample support.

The phrases "introduced into the porous single crystal", "introduced in the porous framework", "providing the solvent (comprising the analyte) to the crystal", "loading of the crystal with the analyte" and similar phrases herein may especially refer to the porous single crystal absorbing the analyte, wherein the analyte is essentially trapped at a binding site (of the framework) of the porous single crystal, especially wherein the analyte is rendered oriented and observable for electron diffraction analysis (see further below).

In particular, the sample holding part may be configured for hosting the one or more single crystals of the porous framework and for receiving the analyte. Especially, the sample holding part may comprise an interior space configured for hosting the one or more single crystals of the porous framework. In embodiments, the interior space may host one or more single crystals of the porous framework. In further embodiments, the interior space may be configured for receiving the one or more single crystals of the porous framework, especially wherein the interior space comprises a solvent, or especially wherein the interior space is empty.

In embodiments, the interior space (of the sample holding part) may comprise a solvent, such as one or more solvents, selected from the group comprising water, hexane, cyclohexane, tetrahydrofuran, dimethylformamide (DMF), methanol and acetone, especially wherein the one or more single crystals of the porous framework are immersed in the solvent. In further embodiments, the solvent may especially be an (organic) solvent selected from the group comprising hexane, cyclohexane, tetrahydrofuran, dimethylformamide (DMF), methanol and acetone. In further embodiments, the solvent may be water. The term "solvent" may herein also refer to a plurality of (different) solvents.

In further embodiments, the sample holding part may comprise an inlet configured for receiving the analyte, especially for receiving a (second) solvent comprising the analyte. In particular, the inlet may be configured for receiving the analyte and for providing the analyte to the collection chamber, especially to the interior space (of the collection chamber). Hence, in embodiments, the inlet may be configured to be functionally coupled to a device, wherein the device is configured to provide the analyte, especially a (second) solvent comprising the analyte, to the inlet. For instance, in embodiments, the device may comprise a chromatography device, such as a supercritical fluid chromatography device.

In embodiments, the sample holding part may host one or more single crystals of a porous framework, especially such that the one or more single crystals of the porous framework are configured (in the sample holding part) in the interior space. In particular, the sample holding part may host the one or more single crystals of the porous framework such that the one or more single crystals of the porous framework are arranged in fluid connection with the inlet, i.e., the one or more single crystals may be arranged in the sample holding part such that the one or more single crystals are brought into contact with (a solvent comprising) an analyte entering the interior space via the inlet.

The sample holding part, especially the collection chamber, may especially be configured for accommodating the one or more single crystals of the porous framework (herein further also referred to as "crystal", "single porous crystal", "single crystal", "porous crystal", and similar terms, see further below).

The terms "porous single crystal", "the single crystal of the porous framework" and similar terms may herein especially refer to a porous (crystal) compound having a three-dimensional framework and three-dimensionally regularly-arranged pores and/or hollows. The term "single crystal" is especially used indicating that the porous single crystal is especially a monolithic compound. Moreover, the term "(porous) framework" especially refers to a three dimensional framework, especially having three-dimensionally arranged pores. Hence, the term porous crystal of the porous framework may refer to a monolithic porous framework (or compound). In embodiments, the porous single crystal may comprise a crystalline sponge. In further embodiments, the porous single crystal may comprise a porous single crystal as described in EP3269849A1 and/or EP3118610A1, which are hereby herein incorporated by reference.

In embodiments, the porous single crystal, especially (the single crystal of) the porous framework, may comprise a metal-organic framework material. A metal-organic framework material may comprise an organic-inorganic hybrid crystalline porous material comprising an essentially regular array of metal ions (or clusters) surrounded by organic linkers.

The metal-organic framework material may in embodiments be formed of a metal salt ZnX₂, especially where X = Cl or Br or I. In further embodiments, the metal-organic framework material may be tri-pyridinyl triazine (tpt)-based, especially tpt-ZnX₂ based, such as 2 tpt . 3 ZnX₂ based, especially where X comprises an element selected from the group comprising Cl, Br and I. Especially, X = Cl, Br or I. In further embodiments, the metal-organic framework material may comprise a cartridge-based system. In further embodiments, the metal-organic framework material may be tpt-ZnCl₂ based. In further embodiments, the metal-organic framework material may be tpt-ZnBr₂ based. In further embodiments, the metal-organic framework material may be tpt-ZnI₂ based. In further embodiments, ZnX₂, especially tpt-ZnX₂ may comprise two different elements X selected from the group comprising Cl, Br, and I. However, in general, ZnX₂, especially tpt-ZnX₂, may comprise twice the same element selected from the group comprising Cl, Br, and I.

In embodiments, (the single crystal of) the porous framework comprises a metal-organic framework material, wherein the metal-organic framework material is formed of a metal salt ZnX₂ where X = Cl or Br or I.

The term "cartridge-based system" may especially refer to a biporous coordination network. The term "biporous coordination network" and similar terms may herein especially refer to a porous coordination network comprising two (or more) distinct large channels, especially wherein the pores are arranged and surrounded by aromatic structures. Such a biporous coordination network may have the ability to take up two (or more) guests independently, thereby allowing the simultaneous isolation of two different guests. Such biporous materials may be composed of alternatively layered 2,4,6-tris(4-pyridyl)-1,3,5-triazine (TPT) and triphenylene; especially wherein the TPT ligand forms infinite 3D network via coordination to ZnI₂, whereas the triphenylene is especially involved in the 3D framework without forming any covalent or coordination bonds with other components. The noncovalently intercalated triphenylene may contain suitable functional groups without causing any change in the biporous coordination networks.

In particular, the term "biporous coordination networks" may especially refer to the coordination networks described by Ohmori et al., 2005, "a Two-in-One Crystal: Uptake of Two Different Guests into Two Distinct Channels of a Biporous Coordination Network", Angewandte Chemie International Edition, 44, 1962-1964 and/or Kawano et al., 2007, "The Modular Synthesis of Functional Porous coordination Networks", Journal of the American Chemical Society, 129, 15418-15419, which are hereby herein incorporated by reference.

Metal organic frameworks formed of ZnX₂ may be particularly suitable given the flexibility due to interpenetrating networks, the electron deficiency due to TPT ligands, and the possibilities to form weak non-covalent type interactions between the porous single crystal and the analyte.

Alternatively, (the single crystal of) the porous framework may comprise (purely) organic materials. The single crystal may in further embodiments comprise a covalent organic framework (COF). Covalent organic frameworks (COFs) may be constructed from organic building units using strong covalent bonds between light atoms (e.g., H, B, C, N, O, Si).

The single crystal of the porous network may in embodiments comprise a porous, crystalline framework.

In embodiments, the single crystal may be part of an aggregate (of single crystals). However, in general, the single crystal may be non-aggregated. In particular, it may be preferable for the single crystal to be non-aggregated as aggregation may interfere with analyte distribution and dispersion with the crystalline structure and may interfere with obtaining measurements on an organized structure, i.e., the use of non-aggregated single crystals may facilitate obtaining non-overlapping measurement data a higher quality of data, which may in general be higher quality data.

In embodiments, the one or more single crystals of the porous framework may (each) have a spherically equivalent diameter ≤ 10 µm, especially ≤ 2 µm, such as ≤ 1 µm, especially ≤ 800 nm. In further embodiments, at least 50%, such as at least 60%, of the one or more single crystals of the porous framework may (each) have a spherically equivalent diameter ≤ 10 µm, especially ≤ 2 µm, such as ≤ 1 µm, especially ≤ 800 nm. In further embodiments, at least 70%, such as at least 80%, especially at least 90%, of the one or more single crystals of the porous framework may (each) have a spherically equivalent diameter ≤ 10 µm, especially ≤ 2 µm, such as ≤ 1 µm, especially ≤ 800 nm.

The equivalent spherical diameter (or ESD) (or "spherical equivalent diameter") of an (irregularly shaped) three-dimensional shape is the diameter of a sphere of equivalent volume. For a sphere, the diameter is the same as the equivalent spherical diameter. Would a sphere in an xyz-plane with a diameter D be distorted to any other shape (in the xyz-plane), without changing the volume, then the equivalent spherical diameter of that shape would be D.

In further embodiments, the single crystal may have a smallest characteristic dimension (or size), especially a smallest spherically equivalent diameter, of at least 50 nm, such as at least 100 nm, especially at least 200 nm, such as at least 300 nm, even more especially at least 500 nm. The characteristic dimension (size) may especially be 10 µm at maximum, such as 1 µm at maximum. In embodiments, the characteristic dimension (size) of the single crystal may be in the range of 10-2000 nm, especially in the range of 50-1000 nm, such as in the range of 100-800 nm.

In embodiments, the sample holding arrangement may further comprise a removeable closing part. The removeable closing part may especially be configured to close, especially seal, (the inlet of) the sample holding part. In further embodiments, the removeable closing part may be selected from the group comprising a seal and a cap. In particular, the removeable closing part may be configured to fluidically separate the interior space from outside of the sample holding part. The removeable closing part may especially be removed when (i.e., right before) adding the analyte. Thereby, a (first) solvent in which the one or more single crystals of the porous framework may be immersed may be kept from evaporating until exposure to the analyte, and the sample holding part may be directly ready for use, such as for use in the sample preparation method.

Hence, the sample holding arrangement may provide a convenient consumable for preparing a sample for electron diffraction analysis of an analyte.

In embodiments, the sample holding arrangement may, especially prior to removal of the removeable closing part, comprise a solvent. In particular, the one or more single crystals of the porous framework may be immersed in the solvent.

Further, especially upon providing the analyte to the one or more single crystals of the porous framework, a (second) solvent may be introduced into the collection chamber. In particular, the (second) solvent may comprise the analyte.

In further embodiments, the sample holding part may be configured for receiving the analyte with a second solvent. In particular, the second solvent may be selected from the group comprising water, hexane, cyclohexane, tetrahydrofuran, dimethylformamide (DMF), methanol and acetone, especially wherein the analyte is dissolved in the solvent. In further embodiments, the second solvent may especially be an (organic) solvent selected from the group comprising hexane, cyclohexane, tetrahydrofuran, dimethylformamide (DMF), methanol and acetone. In further embodiments, the second solvent may be water. In further embodiments, the second solvent may be CO₂, especially supercritical CO₂, or especially liquid CO₂. It will be clear to the person skilled in the art that the second solvent may especially be selected in view of compatibility with the analyte, such as for providing satisfactory dissolution of the analyte in the second solvent.

Hence, during use of the sample holding arrangement, the collection chamber may be exposed to a solvent and a second solvent. In embodiments, the solvent and the second solvent may be the same solvent. In further embodiments, the solvent and the second solvent may be different solvents.

Herein, also the term "first solvent" may be used to specifically refer to a solvent already present in the collection chamber prior to the addition of the analyte.

Given the exposure of the collection chamber to (organic) solvents, it may be preferably for the collection chamber to comprise a solvent-resistant material. In embodiments, the collection chamber may especially comprise a material selected from the group comprising metals, such as aluminum, glass, quartz, and solvent-resistant polymers, such as polyimide, polypropylene, polyethylene, polyvinylidene difluoride, polychlorotrifluoroethylene polymethylpentene, and polytetrafluoroethylene.

In further embodiments, the collection chamber may comprise an optically transparent material. Such a material may facilitate controlling volume and/or evaporation rates.

The collection chamber may further be exposed to elevated temperatures and/or pressures to facilitate loading of the single crystals (see below). Hence, the collection chamber may comprise a chamber material selected in view of pressure tolerance, heat tolerance, mechanical stability, and solvent tolerance, especially in view of pressure and heat tolerance. Hence, in embodiments, the sample holding part may comprise one or more of aluminum, such as an aluminum composite, stainless steel, brass, and copper.

In embodiments, the sample holding part may comprise the connector part. The connector part may be (configured to be) functionally coupled to the sample holding part, especially to the inlet.

In further embodiments, the connector part may hold, support or e.g. clamp the sample holding part. The connector part may in embodiments at least partly enclose the sample holding part. The connector part and the sample holding part may in embodiments have a (mutually complementary) thread allowing to screw the connector part to the sample holding part (and especially also allowing to unscrew the parts from each other again) . The respective parts may in further embodiments comprise complementary (bayonet) elements for defining a (bayonet) mount, especially allowing to associate the parts (and further especially to disassociate the parts (again)). In yet further embodiments, the sample holding part may be press fitted to (in) the connector part. In further specific embodiments the sample holding part may be at least partly deformable and the sample holding part may be (partly) squeezed in the connector part. Additionally or alternatively, the connector part may at least be partly deformable allowing to squeeze the sample holding part to be (partly) squeezed in or to the connector part. In embodiments, the sample holding part may comprise elements for associating the sample holding part to the connector part. Additionally or alternatively the connector part may comprise elements for associating with the sample holding part (especially being complementary to the elements comprised by the sample holding part). The element may e.g. comprise a mechanical element such as described above and/or a friction element. The elements may comprise magnetic elements.

Especially, the connector part may (also) be configured for functionally coupling the sample holding part to an electron diffraction sample support. In particular, the connector part may be configured for functionally coupling, such as physically coupling, the sample holding part and the electron diffraction sample support such that one or more single crystals of the porous framework may be provided from the sample holding part to the electron diffraction sample support. In particular, in embodiments, the one or more single crystals of the porous framework may be transferred from the sample holding part to the electron diffraction sample support by gravity, such as by positioning the electron diffraction sample support below the sample holding part.

In particular, the connector part may be configured to provide an opening between the sample holding part and the electron diffraction sample support, wherein the connector part is configured such that the one or more single crystals of the porous framework may be provided from the sample holding part to the electron diffraction sample support through the opening. In embodiments, the connector part may comprise a tapering part tapering towards the opening. In further embodiments, the opening may have an opening diameter dₒ selected to match a grid diameter d_{g} of a (grid of) the electron diffraction sample support.

The term "electron diffraction sample support" may herein especially refer to a support structure suitable for hosting the one or more single crystals of the porous framework during electron diffraction analysis. In embodiments, the electron diffraction sample support may comprise an electron diffraction grid ("ED grid"), and the connector part may be configured for functionally coupling the sample holding part and the electron diffraction sample support such that one or more single crystals of the porous framework may be provided from the sample holding part to the ED grid.

In particular, in embodiments, the connector part may be configured such that the electron diffraction sample support, especially the ED grid, and the one or more single crystals of the porous framework are in fluid contact when the sample holding part and the electron diffraction sample support are functionally coupled by the connector part.

In further embodiments, the connector part may comprise a support hosting part (or "grid hosting part") configured to host the electron diffraction sample support. Hence, in embodiments, the connector part may comprise the electron diffraction sample support.

In further embodiments, the connector part may comprise a tapering part, especially wherein the tapering part is configured to taper towards the electron diffraction sample support. In particular, the tapering part may be configured to taper towards the electron diffraction sample support when the sample holding part and the electron diffraction sample support are functionally coupled by the connector part. The tapering shape may facilitate providing the one or more single crystals of the porous framework to the electron diffraction sample support. In particular, the tapering part may be configured to guide the one or more single crystals of the porous framework, and optionally a (second) solvent, to the electron diffraction sample support.

In embodiments, the sample holding part and the connector part may form a monolithic element, i.e., the sample holding part and the connector part may be (essentially) a single combined part. For instance, in embodiments, the connector part and the sample holding part may be the same (monolithic) element, such as a bottle with a rim to connect. Hence, the tapering part may, for instance, define at least part of the interior space.

In further embodiments, the sample holding part and the connector part may be two separate parts, which especially may be physically separable. For instance, the connector part and the sample holding part may be separate elements, such as a bottle and a cap. Hence, in embodiments, the connector part may be configured to be detachably connected to the sample holding part.

In embodiments, the sample holding arrangement may further comprise an outer container and an outer container closing part. Especially, in such embodiments, the outer container may comprise an outer container space, and may, in embodiments, be configured to host the sample holding part in the outer container space. Especially, the outer container closing part may be configured to close the outer container space. In particular, in embodiments, the outer container closing part may comprise a septum, especially wherein the outer container closing part comprises a tube (or "cannula") arranged through the septum. Such embodiments may be particularly convenient for (controlled) evaporation (see below) of a solvent, such as a first solvent, or such as a second solvent, from the one or more single crystals of the porous framework, especially from the sample holding part, or especially from the electron diffraction sample support.

In embodiments, the outer container and the outer container closing part may be the same element. Especially, the outer container and the outer container closing part may be monolithic. In further embodiments, the outer container and the outer container closing part may be physically separable, i.e., they may be distinct elements.

In embodiments, the sample holding arrangement may further comprise the electron diffraction sample support. Especially, the sample holding arrangement may comprise the sample holding part functionally coupled to the electron diffraction sample support, such as via the connector part.

In a further aspect the invention may provide a kit of parts. The kit of parts may especially comprise the sample holding arrangement of the invention and (a support hosting part hosting) an electron diffraction sample support.

In particular, the sample holding arrangement, especially the connector part, may be configured for functionally coupling to the electron diffraction sample support.

The electron diffraction sample support may especially be configured to receive the one or more single crystals of the porous framework from the sample holding arrangement.

The electron diffraction sample support may especially be suitable for hosting a prepared sample (comprising the one or more single crystals of the porous framework with a therein included analyte) during an electron diffraction analysis. Hence, the electron diffraction sample support may comprise a material suitable for the electron diffraction analysis, i.e., a material providing little or no interference for the measurement. In particular, any matter in the beam path during electron diffraction may absorb electrons significantly, which absorption may beneficially be reduced to a minimum.

Hence, in embodiments, the electron diffraction sample support may comprise a carbon-based support (or "carbon-based layer"), especially a graphene-based support (or "graphene-based layer"). In particular, the electron diffraction sample support may comprise a (thin) layer of carbon, especially graphene, configured to host the one or more single crystals of the porous framework.

For instance, the carbon layer may be deposited on a soluble polymer by vapor deposition, after which the polymer may be dissolved and a few nm thick carbon layer may remain.

In further embodiments, the carbon-based support may be arranged on a support, especially a support grid.

In particular, the electron diffraction sample support may comprise a metal support, wherein the carbon-based support is (directly or indirectly) arranged on the metal support. The metal support may especially comprise a metal grid.

In further embodiments, the support grid, especially the metal grid, may have a diameter selected from the range of 2 - 10 mm, such as from the range of 3 - 8 mm, especially about 3 mm.

In further embodiments, the electron diffraction sample support, especially the support grid, more especially the metal grid, may comprise grid holes having a grid hole diameter selected from the range of 0.1 - 15 µm, such as from the range of 0.3 - 12 µm, especially from the range of 0.5 - 10 µm, such as from the range of 1 - 10 µm.

In embodiments, the grid hole diameters of the grid holes may be selected based on the sizes of the one or more single crystals. In particular, the grid holes may (on average, by number) have a diameter smaller than the spherically equivalent diameter (on average, by number) of the one or more single crystals. However, even if the grid holes are (slightly) larger than the single crystals, the electron diffraction sample support, especially the support grid, may still host the single crystals as the single crystals may adhere to the electron diffraction sample support, such as to the carbon layer. In particular, in embodiments, a grid hole diameter of the grid holes may be selected such as to prevent escape of the one or more single crystals of the porous framework through the grid. Hence, in embodiments, the electron diffraction sample support may be configured to host the one or more single crystals and to prevent loss of the one or more single crystals.

The equivalent circular diameter (or ECD) (or "circular equivalent diameter") of an (irregularly shaped) two-dimensional shape is the diameter of a circle of equivalent area. For instance, the equivalent circular diameter of a square with side a is 2^{∗}a^{∗}SQRT(1/π). For a circle, the diameter is the same as the equivalent circular diameter. Would a circle in an xy-plane with a diameter D be distorted to any other shape (in the xy-plane), without changing the area size, then the equivalent circular diameter of that shape would be D.

In embodiments, the metal support, especially the metal grid, may comprise a grid material selected from the group comprising copper, gold, stainless steel, and aluminum, especially from the group comprising copper and gold. In particular, the grid material may be selected in view of electric conductivity and (chemical) inertness.

In further embodiments, the electron diffraction sample support may comprise a support polymer, especially wherein the support polymer is configured to support the carbon layer, or especially wherein the support polymer is configured to support the metal support, such as a gold or copper metal support. In particular, the support polymer may comprise a thermoplastic resin formed from polyvinyl alcohol and formaldehyde as copolymers with polyvinyl acetate. The support polymer may especially be a Formvar polymer.

In further embodiments, the electron diffraction sample support may comprise a gold-based support or gold-coated grid. In particular, in embodiments, the electron diffraction sample support may comprise a gold-based support configured to host the one or more single crystals of the porous framework. In further embodiments, the electron diffraction sample support may comprise a gold-coated grid configured to host the one or more single crystals of the porous framework.

In embodiments, the sample holding arrangement may have an opening with an opening diameter dₒ. In particular, the connector part may be configured to provide the opening. In further embodiments, the opening diameter dₒ may be similar to the grid diameter d_{g}, such as wherein the inlet (or "opening") has a circularly equivalent opening diameter dₒ selected from the range of 0.9^{∗}d_{g} - 1.2^{∗}d_{g}, especially wherein dₒ is (about) the same as d_{g}. Thereby, when the sample holding part and the electron diffraction sample support are functionally coupled (via the connector part), the one or more single crystals of the porous framework may be specifically provided to the (grid of the) electron diffraction sample support.

In further embodiments, dₒ may be selected from the range of 0.6^{∗}d_{g} - 1.4^{∗}d_{g}, such as from the range of 0.8^{∗}d_{g} - 1.2^{∗}d_{g}.

Hence, in embodiments, the electron diffraction sample support may comprise a grid, especially a metal grid. In embodiments, the electron diffraction sample support, especially the grid, may have a circularly equivalent grid diameter d_{g} selected from the range of 1 - 10 mm. Especially, in embodiments, the inlet (or "opening") may have a circularly equivalent opening diameter dₒ selected from the range of 0.9^{∗}d_{g} - 1.2^{∗}d_{g}.

The electron diffraction sample support may especially be configured to host the one or more single crystals of the porous framework. In particular, the electron diffraction sample support may have a grid size suitable to host the one or more single crystals of the porous framework. This need not necessarily imply that the size of the grid holes is smaller than the size of single crystals, as the single crystals may also adhere to the ED sample support, such as to the carbon layer.

In a further aspect, the invention may provide a sample preparation method for providing a prepared ED sample support. The sample preparation method may especially comprise a preparation stage, a loading stage, and a transfer stage. The preparation stage may comprise providing a sample holding part, wherein the sample holding part comprises a collection chamber having an interior space. In embodiments, the interior space may host one or more single crystals of a porous framework. In further embodiments, the method may comprise providing the one or more single crystals of the porous framework to the interior space (of the collection chamber). Especially, the one or more single crystals of the porous framework may have a spherically equivalent diameter ≤ 10 µm, such as ≤ 2 µm, especially ≤ 1 µm. In embodiments, the loading stage may comprise providing the analyte to the one or more single crystals of the porous framework. In further embodiments, the transfer stage may comprise bringing the one or more single crystals of the porous framework in contact with an electron diffraction sample support, especially after functionally coupling the electron diffraction sample support to the sample holding part. Hence, the transfer stage may comprise transferring the one or more single crystals of the porous framework from the interior space (of the collection chamber) to the electron diffraction sample support. Thereby, the sample preparation method may provide the prepared ED sample support.

In general, in embodiments, the loading stage may be temporally arranged prior to the transfer stage, i.e., first a prepared sample may be provided, wherein the prepared sample comprises the single crystals comprising the analyte, wherein the prepared sample is subsequently transferred to the electron diffraction sample support. However, in further embodiments, the transfer stage may be temporally arranged prior to the loading stage, i.e., the single crystals are first provided to the electron diffraction sample support, and are subsequently loaded with the analyte. In particular, loading prior to transfer may facilitate additional freedom in experimental (loading) conditions, such as with regards to temperature, solvent, and pressure, which conditions be incompatible with or detrimental to the sample support. In contrast, loading after transfer may be beneficial as it facilitates ensuring that crystals of the porous framework have been deposited prior to soaking, whereas transfer after soaking may be more challenging (single crystals may adhere to the walls or crystals of the analyte might be deposited instead of the single crystals of the porous framework).

In further embodiments, the loading stage and the transfer stage may (at least partially) temporally overlap, i.e., the crystals may be transferred to the electron diffraction sample support while being soaked.

The method may especially comprise using the sample holding arrangement or the kit of parts of the invention.

The method of the invention may provide the benefit that samples suitable for electron diffraction analysis can be conveniently prepared. In particular, the sample preparation method may comprise loading an analyte into the one or more single crystals to yield a prepared sample, and may comprise arranging the prepared sample on an electron diffraction sample support suitable for subsequent electron diffraction analysis to provide a prepared ED sample support.

Hence, in specific embodiments, the invention provides a sample preparation method for providing a prepared ED sample support, the sample preparation method comprising: a preparation stage comprising providing a sample holding part, wherein the sample holding part comprises a collection chamber having an interior space, wherein the interior space hosts one or more single crystals of a porous framework, wherein the one or more single crystals of the porous framework have a spherically equivalent diameter ≤ 10 µm; a loading stage comprising providing the analyte to the one or more single crystals of the porous framework; and a transfer stage comprising bringing the one or more single crystals of the porous framework in contact with the electron diffraction sample support; thereby providing the prepared ED sample support.

Hence, the invention may provide a sample preparation method for providing a prepared electron diffraction sample support (or "prepared ED sample support").

The term "prepared ED sample support" may herein refer to an electron diffraction sample support, which is suitable for electron diffraction analysis, hosting one or more single crystals of a porous framework, wherein the one or more single crystals of a porous framework are loaded with an analyte. Hence, the prepared ED sample support may be ready for electron diffraction analysis for analyzing the analyte.

The sample preparation method may comprise one or more of a preparation stage, a loading stage, and a transfer stage.

In embodiments, the sample preparation method may comprise the preparation stage. The preparation stage may comprise providing a sample holding part, especially a sample holding part of the sample holding arrangement of the invention. In embodiments, the sample holding part may comprise a collection chamber having an interior space. Especially, the interior space may host one or more single crystals of a porous framework. Alternatively or additionally, in embodiments, the sample preparation method may comprise providing the one or more single crystals of the porous framework to the interior space (of the collection chamber of the sample holding part). The one or more single crystals of the porous framework may especially have a spherically equivalent diameter ≤ 10 µm, such as ≤ 1 µm. In embodiments, the interior space may (further) host a (first) solvent, especially an organic solvent. In further embodiments, the sample preparation method may comprise providing the (first) solvent to the interior space. In particular, the one or more single crystals of the porous framework may be (at least partially) immersed in the (first) solvent.

In further embodiments, the preparation stage may comprise removing a removeable closing part from the sample holding part.

In embodiments, the sample preparation method may comprise the loading stage. The loading stage may especially comprise providing the analyte to the one or more single crystals of the porous framework. In particular, the sample preparation method may comprise contacting the one or more single crystals of the porous framework with the analyte, such as by providing the analyte to the interior space, especially by providing a second solvent to the interior space, wherein the second solvent comprises the analyte. In particular, the loading stage may comprise soaking the one or more single crystals of the porous framework in a solvent, especially a first solvent, or especially a second solvent, comprising the analyte. As the sample holding part may comprise a first solvent wherein the single crystals are immersed, and as the analyte may be provided in a second solvent, the loading stage may especially comprise soaking the one or more single crystals of the porous framework in a solvent (mixture) comprising the first solvent and the second solvent. As indicated above, in embodiments, the first solvent and the second solvent may be the same solvent.

The soaking of the one or more single crystals may especially be to introduce the analyte into the one or more single crystals of the porous framework, especially to provide a prepared sample, i.e., after the loading (stage), the one or more single crystals may comprise a prepared sample comprising one or more doped porous single crystals. In particular, the loading stage may comprise soaking the one or more single crystals during a soaking period. In embodiments, the soaking period may be at least 10 minutes, such as at least 30 minutes, or at least 1 hour. The soaking period may especially be 4 days at maximum, such as equal to or less than 3 days, more especially between 10 minutes and 48 hours, especially between 10 minutes and 24 hours, such as 1-24 hours.

In embodiments, the sample preparation method may further comprise a transfer stage comprising providing the one or more single crystals of the porous framework to an electron diffraction sample support (see above). In particular, the sample preparation method may comprise bringing the one or more single crystals of the porous framework in contact with the electron diffraction sample support, especially transferring the one or more single crystals of the porous framework from the sample holding part to the electron diffraction sample support. In embodiments, the transfer stage may comprise functionally coupling an electron diffraction sample support to the sample holding part.

Hence, in embodiments, the transfer stage may comprise (i) functionally coupling the sample holding part and the electron diffraction sample support with a connector part (see above), and especially (ii) transferring the single crystals of the porous framework from the sample holding part to the electron diffraction sample support via the connector part.

In further embodiments, the transfer stage may comprise collecting the single crystals of the porous framework from the sample holding part and providing the (collected) single crystals to the electron diffraction sample support, especially to an ED grid. For instance, in embodiments, the transfer stage may comprise transferring the single crystals of the porous framework from the sample holding part to the electron diffraction sample support, especially to an ED grid, such as via the connector part.

The term "stage" and similar terms used herein may refer to a (time) period (also "phase") of a method and/or an operational mode. The different stages may (partially) overlap (in time). For example, the loading stage may, in general, be initiated prior to the transfer stage, but may partially overlap in time therewith. However, for example, the preparation stage may typically be completed prior to the loading stage. Similarly, the transfer stage may typically be completed prior to the electron diffraction analysis stage (see below). It will be clear to the person skilled in the art how the stages may be beneficially arranged in time. For instance, the cooling stage and the electron diffraction analysis stage (see below) may beneficially temporally overlap to improve stability of the one or more (doped) single crystals while subjecting them to electron diffraction.

Hence, in embodiments, (at least part of) the loading stage may be temporally arranged prior to the transfer stage. In further embodiments, (at least part of) the transfer stage may be temporally arranged prior to the loading stage. Irrespective of the order, the sample preparation method may provide a prepared ED sample support, i.e., an electron diffraction sample support loaded with a prepared sample. In particular, the prepared ED sample support may be suitable for electron diffraction analysis.

The loading stage may especially comprise providing conditions to facilitate loading of the one or more single crystals of the porous framework with the analyte, especially during the soaking. In particular, the loading stage may comprise exposing the one or more single crystals of the porous framework to a temperature and/or pressure suitable for loading of the one or more single crystals of the porous framework with the analyte. For instance, the loading stage may comprise providing an elevated temperature and/or pressure to facilitate the loading.

In embodiments, the loading stage may comprise exposing the one or more single crystals of the porous framework to a temperature selected from the range of -80 °C to 80°C, especially from the range of -50°C to 50 °C, such as from the range of 25°C to 50 °C. As indicated above, the temperature may be selected based on the analyte. For instance, for a volatile analyte, a (relatively) low temperature may be selected, such as (about) -50°C.

In embodiments, the loading stage may comprise loading the analyte into the crystal to provide an occupation of the analyte position in the single crystal such that at least 20 % of pores of the single crystal comprise the analyte, such as at least 50 %, especially at least 60 %. In further embodiments, the loading stage may comprise loading the analyte into the crystal to provide an occupation of the analyte position in the single crystal such that 80 - 99 % of the pores of the single crystal comprise the analyte.

As the single crystals and/or the analyte may be provided with a (respective) solvent, the one or more single crystals may, especially after loading, be immersed in the solvent(s). It may be preferable for the electron diffraction analysis to remove at least part of the solvent as residual solvent could crystallize or form a layer of material obscuring the crystals from direct observation and measurement. However, for stability of the MOF in handling, it may be favorable not to remove solvent from the MOF pores (e.g. by drying due to exposure to ambient air or vacuum) as well as to reduce, especially prevent, precipitation of analyte on top of (or: on an outer surface of) the MOF crystals. Hence, in specific embodiments, it may be desirable to maintain 0.001-5 wt% of solvent relative to a total weight of the prepared sample, such as at most 3 wt% of solvent, especially at most 1 wt%. The term "prepared sample" may specifically refer to the one or more (doped) single crystals of the porous framework, the analyte (loaded into the single crystals), and the solvent (in which the single crystals are (at least partially) immersed.

Hence, in embodiments, the sample preparation method may further comprise an evaporation stage. The evaporation stage may comprise evaporating (at least part of) a solvent, such as a first solvent and/or a second solvent, from the one or more single crystals of the porous framework. The evaporation stage may, generally, be temporally arranged after the loading stage, as the loading may beneficially occur via soaking in the solvent comprising the analyte. The evaporation stage may, however, temporally be arranged prior to or after the transfer stage, especially prior to, or especially after.

In further embodiments, the evaporation stage and the transfer stage may (at least partially) temporally overlap.

The evaporation of the solvent may further contribute to the loading of the crystal.

Hence, in further embodiments, the evaporation stage may comprise evaporating (at least part of) a solvent, such as a first solvent and/or a second solvent, from the prepared sample, especially to provide a prepared sample comprising an occupation of the analyte position in the single crystal such that at least 20 % of pores of the single crystal comprise the analyte, such as at least 50 %, especially at least 60 %. In further embodiments, the occupation of the analyte position in the single crystal may be such that 80 - 99 % of the pores of the single crystal comprise the analyte.

In further embodiments, the evaporation stage may comprise evaporating (at least part of) a solvent, such as a first solvent and/or a second solvent, from the sample holding part.

In further embodiments, the evaporation stage may comprise evaporating (at least part of) a solvent, such as a first solvent and/or a second solvent, from the electron diffraction sample support.

In embodiments, the evaporation stage may comprise exposing the solvent to one or more of a temperature and/or pressure suitable for the evaporation of the solvent. It will be clear to the person skilled in the art that the selection of a suitable temperature and/or pressure may depend on the solvent, and may further depend on the other parameter (e.g., a higher temperature may be needed to facilitate evaporation at a higher pressure). In further embodiments, the temperature and/or pressure may be selected to provide conditions maintaining a supercritical state of (at least one of) the solvent(s).

In further embodiments, the evaporation stage may comprise exposing the solvent to an (increased) airflow, thereby facilitating evaporation. For instance, in embodiments, the evaporation stage may comprise providing an airflow to the solvent, such as by using a blower.

In further embodiments, the evaporation stage may comprise exposing the solvent to heating, thereby facilitating evaporation. For instance, in embodiments, the evaporation stage may comprise providing heating to the solvent, such as by using a heater.

The selection of pressure, temperature and airflow may affect the evaporation rate of the solvent, which may affect the soaking of the single crystals.

Hence, in embodiments, the evaporation stage may comprise controlling an evaporation rate of the solvent, especially by controlling one or more of a temperature, a pressure, and an airflow (the solvent is exposed to).

In embodiments, the sample preparation method may further comprise a cooling stage. The cooling stage may especially comprise (flash) cooling the prepared sample, especially the prepared ED sample support (hosting the prepared sample). In particular, the cooling stage may comprise cooling the prepared sample to a temperature selected from the range of - 300 °C - -25 °C, such as from the range of -269 °C - -80 °C. Hence, the cooling stage may especially comprise cooling the prepared sample to a temperature selected from the boiling point of helium to the sublimation point of CO₂ at atmospheric pressure. In particular, the (relatively) low temperatures may facilitate maintaining the solvent in pores of the single crystal. In further embodiments, the sample preparation stage may especially comprise cooling of the prepared sample with liquid nitrogen.

The cooling of the prepared ED sample support, especially of the prepared sample, may improve the stability of the one or more (doped) single crystals of the porous framework at the conditions at measurement (such as vacuum). The cooling may also improve localization of the analytes within the MOF pores due to reduction of thermal movement and disorder. Cooling may also prevent damage of the crystal due to energy doses applied by the electron beam during the diffraction experiment.

In embodiments, the analyte to be sampled/analyzed may comprise a biological sample, such as (originating from) an extract or a tissue sample. Hence, in embodiments, the analyte may comprise a biologically derived analyte. The analyte may further comprise a chemical sample, such as (an analyte taken from) a product stream or a waste stream of a production process. Especially, the analyte may comprise any arbitrary sample comprising an organic molecule. In embodiments, the analyte to be analyzed may comprise an organic molecule. The term "analyte" may especially relate to a molecule to be analyzed or detected, especially a molecule described herein, more especially to an organic molecule described herein. In embodiments, the analyte may comprise an inorganic molecule. The analyte may further comprise a plurality of (different) molecules. However, in general, the analyte may (essentially) comprise a single molecule type, such as a plurality of same molecules, separated from (a remainder of) a sample, such as via chromatography.

The term "organic molecule" herein may refer to any chemical compound that contains carbon, especially a molecule wherein carbon is covalently linked to other elements such as hydrogen, oxygen and nitrogen. In embodiments, the organic molecule may comprise a biological molecule, especially a biological molecule obtained from a biological source, such as a biological molecule produced by an organism, especially a eukaryote or prokaryote, such as by a plant, animal, fungus, bacterium, or archaeum. In further embodiments, the organic molecule may comprise an active substance (also: "active ingredient" or "active constituent"), especially an active substance with biological activity, i.e., an active substance which has a beneficial and/or adverse effect on living matter, such as an active substance with a pharmaceutical, cosmetical, and/or nutraceutical effect or a salt, acid and/or base thereof. The term "organic molecule" may herein also refer to a plurality of organic molecules.

In embodiments, the analyte, especially the organic molecule, may be selected from the group consisting of an organic biomolecule, i.e., the organic molecule may comprise an organic biomolecule.

The analyte may in embodiments be comprised (especially dissolved) by (in) the (second) solvent. For instance, the (second) solvent may be selected for separating the analyte from one or more other components of a sample, such as via chromatography.

In a further aspect, the invention may provide an electron diffraction analysis method (or "analysis method"). The electron diffraction analysis method may especially comprise the sample preparation method of the invention. The electron diffraction analysis method may further comprise an electron diffraction analysis stage. In embodiments, the electron diffraction analysis stage may comprise subjecting the prepared ED sample support to electron diffraction analysis to provide an electron diffraction signal.

In embodiments, the electron diffraction analysis stage may comprise controlling a temperature of the prepared sample, especially of the prepared ED sample support (hosting the prepared sample) in the range of - 300 °C - -25 °C, such as in the range of -269°C - -80 °C. In particular, controlling the temperature (in the indicated range) during the electron diffraction analysis stage may be beneficial for the stability of the one or more single crystals while being subject to the electron diffraction analysis, which may, for instance be beneficial for structure elucidation of the analyte.

In further embodiments, the electron diffraction analysis method may comprise an analyte identification stage. The analyte identification stage may in embodiments comprise comparing the electron diffraction signal to reference electron diffraction signals comprising structure-related information pertaining to reference analytes, especially reference molecules. Additionally or alternatively, the identification stage may comprise determining (or "predicting") a structure of the analyte based on the electron diffraction signal.

In further embodiments, the identification stage may comprise comparing the electron diffraction signal to reference electron diffraction signals comprising structure-related information pertaining to reference organic molecules. The reference electron diffraction signals may be obtained from a database. Hence, in further embodiments, the identification stage may comprise comparing the electron diffraction signal to reference electron diffraction signals from a database, especially wherein the reference electron diffraction signals comprise structure-related information pertaining to reference analytes, especially reference organic molecules.

In embodiments, the electron diffraction analysis method may comprise a sample providing stage and an analysis stage (and optionally an analyte identification stage), wherein the sample providing stage comprises providing the prepared sample, especially the prepared ED sample support, obtainable according to the sample preparation method as described herein, and wherein the analysis stage comprises subjecting the prepared sample to electron diffraction analysis.

In a further aspect, the invention may provide a system. The system may especially be configured for providing a prepared sample, such as a prepared ED sample support (hosting a prepared sample). In embodiments, the system may be configured for subjecting the prepared sample, especially hosted on the prepared ED sample support, to electron diffraction analysis.

In embodiments, the system may comprise one or more of a hosting element, an analyte handling element and a coupling element. The hosting element may especially (be configured to) host a sample holding part (of a sample holding arrangement), especially the sample holding part of the sample holding arrangement of the invention. The analyte handling element may especially (be configured to) provide an analyte to an interior space (of a collection chamber) of the sample holding part. The coupling element may especially (be configured to) functionally couple the sample holding part to an electron diffraction sample support. Hence, the coupling element may especially comprise or be functionally coupled to the connector part of the sample holding arrangement of the invention. In embodiments, the sample holding part may comprise a collection chamber having an interior space, especially wherein the interior space (is configured to) host one or more single crystals of a porous framework. In embodiments, the one or more single crystals of the porous framework may have a spherically equivalent diameter ≤ 10 µm, such as ≤ 1 µm.

In specific embodiments, the system may comprise (i) a hosting element configured for hosting a sample holding part, (ii) an analyte handling element configured to provide an analyte to the interior space of the sample holding part, and (iii) a coupling element configured to functionally couple the sample holding part to an electron diffraction sample support, wherein the sample holding part comprises a collection chamber having an interior space, wherein the interior space is configured to host one or more single crystals of a porous framework, wherein the one or more single crystals of the porous framework have a spherically equivalent diameter ≤ 10 µm.

In embodiments, the system may comprise a solvent handling element, especially wherein the solvent handling element (is configured to) provide a solvent to the interior space of the sample holding part. For instance, in further embodiments, the solvent handling element may be configured to provide a (first) solvent to the interior space, wherein the (first) solvent comprises the one or more single crystals of a porous framework. In further embodiments, the solvent handling element may be configured to provide a (second) solvent to the interior space, wherein the (second) solvent comprises the analyte.

In embodiments, the system may comprise an evaporation element. The evaporation element may especially (be configured to) control evaporation of a solvent, such as a first solvent, or such as a second solvent. In particular, the evaporation element may (be configured to) control evaporation of the solvent from the one or more (doped) single crystals of the porous framework, such as from the prepared sample. In embodiments, the evaporation element may (be configured to) control evaporation of the solvent from one or more of the interior space (of the sample holding part) and the prepared ED sample support, especially from the interior space, or especially from the prepared ED sample support. The evaporation element may especially (be configured to) subject the one or more single crystals of the porous framework to a temperature and/or pressure suitable for the evaporation of the solvent.

In further embodiments, the system may comprise an electron diffraction analysis unit. The electron diffraction analysis unit may especially (be configured to) subject a prepared ED sample support to electron diffraction analysis, especially to provide an electron diffraction signal. In further embodiments, the electron diffraction analysis unit may especially be configured to provide the electron diffraction signal to the control system.

The term "electron diffraction signal" may herein refer to a signal that is related to the electron diffraction analysis. In particular, the electron diffraction signal may comprise raw and/or processed data related to a (detected) interference pattern (following the firing of electrons at the prepared ED sample support).

The electron diffraction signal may especially comprise structure-related information pertaining to the analyte. In further embodiments, the system, especially the control system, may further comprise a structure determination system, wherein the structure determination system is configured to determine the structure of the analyte based on the electron diffraction signal.

In further embodiments, the system may comprise a cooling element. The cooling element may especially (be configured to) cool a prepared sample, especially the prepared ED sample support. In particular, the cooling element may (be configured to) cool the prepared sample to a temperature selected from the range of - 300 °C - -25 °C, such as from the range of -269°C - -80 °C. The cooling element may especially be configured to cool (the prepared sample) using liquid nitrogen.

The system may further comprise a control system. The control system may especially be configured to control one or more of the hosting element, the analyte handling element, and the coupling element, especially all of the hosting element, the analyte handling element, and the coupling element. In further embodiments, the control system may be configured to control the solvent handling element. In further embodiments, the control system may be configured to control the electron diffraction analysis unit. In further embodiments, the control system may be configured to control the cooling element. In further embodiments, the control system may be configured to control the evaporation element.

The system, especially the control system, may have an operational mode. The term "operational mode" may also be indicated as "controlling mode". The system, or apparatus, or device (see further also below) may execute an action in a "mode" or "operational mode" or "mode of operation". Likewise, in a method an action, stage, or step may be executed in a "mode" or "operation mode" or "mode of operation". This does not exclude that the system, or apparatus, or device may also be adapted for providing another operational mode, or a plurality of other operational modes. Likewise, this does not exclude that before executing the mode and/or after executing the mode one or more other modes may be executed. However, in embodiments a control system (see further also below) may be available, that is adapted to provide at least the operational mode. Would other modes be available, the choice of such modes may especially be executed via a user interface, though other options, like executing a mode in dependence of a sensor signal or a (time) scheme, may also be possible. The operational mode may in embodiments also refer to a system, or apparatus, or device, that can only operate in a single operation mode (i.e. "on", without further tunability).

The term "controlling" and similar terms herein may especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system. The control system and the element may thus at least temporarily, or permanently, functionally be coupled. The element may comprise the control system. In embodiments, the control system and the element may not be physically coupled. Control can be done via wired and/or wireless control. The term "control system" may also refer to a plurality of different control systems, which especially are functionally coupled, and of which e.g. one master control system may be a control system and one or more others may be slave control systems.

Hence, in embodiments, the system, especially the control system, may have an operational mode. The operational mode may especially comprise one or more of a preparation stage, a loading stage, and a transfer stage.

In embodiments, especially in the preparation stage, the hosting element may (be configured to) host the sample holding part, especially wherein the interior space hosts the one or more single crystals of the porous framework. In further embodiments, the interior space may host a (first) solvent. Hence, especially in the preparation stage, the system, especially the hosting element, may provide a sample holding part, wherein the interior space (of the sample holding part) hosts the one or more single crystals of the porous framework.

In embodiments, especially in the loading stage, the analyte handling element may (be configured to) provide the analyte to the one or more single crystals of the porous framework, especially to the interior space, or especially to the electron diffraction sample holder. In particular, especially in the loading stage, the analyte handling element may (be configured to) provide a (second) solvent to the one or more single crystals of the porous framework, wherein the (second) solvent comprises the analyte. Hence, the analyte handling system may comprise or be functionally coupled to a solvent handling system.

In further embodiments, especially in the loading stage, the system, especially the analyte handling element, may (be configured to) soak the one or more single crystals of the porous framework in a (second) solvent comprising the analyte, especially thereby introducing the analyte into the one or more single crystals of the porous framework. Hence, especially in the loading stage, the system may be configured to load the analyte into the one or more single crystals of the porous framework, thereby providing a prepared sample (of one or more doped single crystals of the porous framework).

In further embodiments, especially in the transfer stage, the coupling element may (be configured to) functionally couple the electron diffraction sample support and the sample holding part, especially via a connector part. Hence, especially during (at least part of) the transfer stage, the coupling element may comprise or be functionally coupled to the connector part. In further embodiments, especially in the transfer stage, the coupling element may (be configured to) bring the one or more (doped) single crystals of the porous framework in contact with the electron diffraction sample support, especially (be configured to) transfer the one or more (doped) single crystals of the porous framework to the electron diffraction sample support.

As described above, the one or more single crystals of the porous framework may be loaded in the sample holding part and/or on the electron diffraction sample support. Hence, in embodiments, the loading stage may be temporally arranged (at least partially) prior to the transfer stage, and, in further embodiments, the loading stage may be temporally arranged (at least partially) after the transfer stage and, in yet another embodiment, the loading stage and the transfer stage may be combined into a single stage.

Hence, by executing the loading stage and the transfer stage, the system may provide a prepared ED sample support.

In embodiments, the system may further comprise an evaporation element configured to control evaporation of a solvent. In such embodiments, the operational mode may further comprise an evaporation stage. In further embodiments, especially in the evaporation stage, the evaporation element may (be configured to) evaporate at least part of a (first and/or second) solvent from the one or more single crystals of the porous framework.

The system may, in embodiments, further comprise the cooling element. In such embodiments, the operational mode may further comprise a cooling stage. In further embodiments, especially in the cooling stage, the cooling element may (be configured to) (flash) cool the prepared sample, especially the prepared ED sample support, to a temperature selected from the range of -300 °C - -25 °C, especially form the range of -269°C - -80 °C.

In embodiments, the system may further comprise the electron diffraction analysis unit. In such embodiments, the operational mode may further comprise an electron diffraction analysis stage. In further embodiments, especially in the electron diffraction analysis stage, the electron diffraction analysis unit may (be configured to) subject the prepared ED sample support to electron diffraction analysis, especially to provide an electron diffraction signal (to the control system). In particular, in further embodiments, and especially in the electron diffraction analysis stage, the electron diffraction analysis unit may (be configured to) provide (or "fire") electrons to ("at") the prepared ED sample support, and to detect a (resulting) interference pattern, and especially to provide a (related) electron diffraction signal (to the control system).

The cooling stage and the electron diffraction analysis stage may, in embodiments, temporally overlap, i.e., the cooling element may (be configured to) (flash) cool the prepared sample, especially the prepared ED sample support, while the electron diffraction analysis unit may (be configured to) subject the prepared ED sample support to electron diffraction analysis.

In embodiments, the operational mode may comprise an analyte identification stage. In embodiments, especially in the analyte identification stage, the control system may (be configured to) compare the electron diffraction signal to reference electron diffraction signals comprising structure-related information pertaining to reference analytes, especially reference molecules. Additionally or alternatively, especially in the identification stage, the control system may (be configured to) determine (or "predict ") a structure of the analyte based on the electron diffraction signal.

In further embodiments, especially in the identification stage, the control system may (be configured to) compare the electron diffraction signal to reference electron diffraction signals comprising structure-related information pertaining to reference organic molecules. The reference electron diffraction signals may be obtained from a database. Hence, in further embodiments, especially in the identification stage, the control system may (be configured to) compare the electron diffraction signal to reference electron diffraction signals from a database, especially wherein the reference electron diffraction signals comprise structure-related information pertaining to reference analytes, especially reference organic molecules.

In embodiments, the system may be configured to execute the sample preparation method and/or the electron diffraction analysis method of the invention (see above), especially the sample preparation method, or especially the electron diffraction analysis method.

In a further aspect, the invention may provide a use of the sample holder arrangement according to the invention for preparing a sample for electron diffraction analysis.

In a further aspect, the invention may provide one or more (doped) single crystals of a porous framework for electron diffraction analysis, especially wherein the one or more (doped) single crystals of the porous framework have a spherically equivalent diameter ≤ 10 µm, such as ≤ 1 µm.

The embodiments described herein are not limited to a single aspect of the invention. For example, an embodiment describing the method may, for example, further relate to the system, especially to an operational mode of the system, or especially to the control system. Similarly, an embodiment of the system describing an operation of the system may further relate to embodiments of the method. In particular, an embodiment of the method describing an operation (of the system) may indicate that the system may, in embodiments, be configured for and/or be suitable for the operation. Similarly, an embodiment of the system describing actions of (a stage in) an operational mode may indicate that the method may, in embodiments, comprise those actions.

### BRIEF DESCRIPTION OF THE DRAWINGS

Embodiments of the invention will now be described, by way of example only, with reference to the accompanying schematic drawings in which corresponding reference symbols indicate corresponding parts, and in which: Fig.1 schematically depicts an embodiment of the sample holder arrangement. Fig. 2 schematically depicts an embodiment of the sample holder arrangement. Fig. 3 schematically depicts an embodiment of the system. The schematic drawings are not necessarily on scale.

### DETAILED DESCRIPTION OF THE EMBODIMENTS

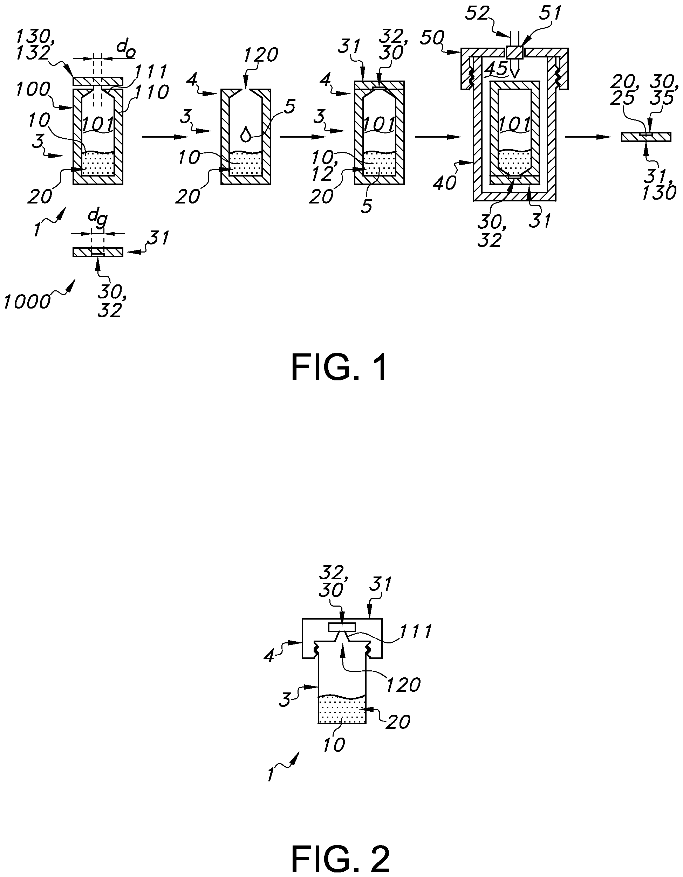

Fig. 1 schematically depicts an embodiment of the sample holding arrangement of the invention. In the depicted embodiment, the sample holding arrangement 1 comprises a sample holding part 3 and a connector part 4. The sample holding part 3 especially comprises a collection chamber 100 having an interior space 101, wherein the interior space 101 hosts one or more single crystals of a porous framework 20. In particular, in the depicted embodiment, the interior space 101 hosts a (first) solvent 10, wherein the one or more single crystals of the porous framework 20 are immersed in the (first) solvent 10. In embodiments, the one or more single crystals of the porous framework 20 may have a spherically equivalent diameter ≤ 10 µm, such as ≤ 5 µm, especially ≤ 1 µm. In further embodiments, the interior space 101 may be configured for receiving an analyte 5. The connector part 4 may especially be functionally coupled to the sample holding part 3. In particular, in the depicted embodiment, the sample holding part 3 and the connector part 4 may be the same part. In further embodiments, such as depicted in fig. 2, the sample holding part 3 and the connector part 4 may be different parts. The connector part 4 may especially be configured for functionally coupling the sample holding part 3 to an electron diffraction sample support 30, which may especially comprise an ED grid 32. In embodiments, the electron diffraction sample support 30 and the one or more single crystals of the porous framework 20 may be in fluid contact when the sample holding part 3 and the electron diffraction sample support 30 are functionally coupled by the connector part 4. Especially, the connector part 4 may be configured to provide an opening 120 between the sample holding part 3 and the electron diffraction sample support 30.

In the depicted embodiment, the connector part 4 comprises a grid hosting part 31 configured to host the electron diffraction sample support 30.

Further, in the depicted embodiment, the sample holding arrangement 1 comprises a removeable closing part 130, wherein the closing part 130 is configured to close, especially seal, the sample holding part 3. In further embodiments, the closing part may be selected from the group comprising a seal 132 and a cap.

In particular, in fig. 1, the sample holding arrangement 1 is drawn with the removeable closing part 130 at the left of the figure, and the closing part 130 is removed to facilitate providing the analyte 5 to the interior space 101 after the first arrow in the figure.

In the depicted embodiment, the connector part 4 comprises a tapering part 111, wherein the tapering part 111 is configured to, when the sample holding part 3 and the electron diffraction sample support 30 are functionally coupled by the connector part 4, taper towards the electron diffraction sample support 30. In particular, in the depicted embodiment, the tapering part 111 defines at least part of the interior space 101.

Further, schematically depicted on the right side of Fig. 1, the sample holding arrangement may comprise an outer container 40 and an outer container closing part 50. Especially, the outer container 40 may be configured to host the sample holding part 3 in an outer container space 45, and the outer container closing part 50 may especially be configured to close the outer container space 45. In particular, the outer container closing part 50 may comprise a septum 51, and the outer container closing part 50 may especially comprise a tube 52 (or "cannula") arranged through the septum 51. Thereby, the sample holding arrangement 1 may facilitate evaporating of a solvent from the one or more single crystals of the porous framework 20.

Fig. 1 further schematically depicts an embodiment of a kit of parts 1000 according to the invention. In particular, in the depicted embodiment, the kit of parts 1000 comprises the sample holding arrangement 1 according to the invention and (a grid hosting part 31 hosting) an electron diffraction sample support 30.

In embodiments, the electron diffraction sample support 30 may comprise an ED grid 32 having a circularly equivalent grid diameter d_{g} selected from the range of 1 - 10 mm. In such embodiments, the opening 120 (between the sample holding part 3 and the connector part 4 may especially have a circularly equivalent opening diameter dₒ selected from the range of 0.9^{∗}d_{g} - 1.2^{∗}d_{g}.

In further embodiments, the electron diffraction sample support 30, especially the ED grid, may comprise a plurality of grid holes, especially wherein the grid holes have circularly equivalent grid hole diameters dₕ selected from the range of 0.1 - 12 µm, such as from the range of 0.5 - 10 µm.

Fig. 1 further schematically depicts an embodiment of the sample preparation method for providing a prepared ED sample support 35. The sample preparation method may especially comprise a preparation stage, a loading stage, and a transfer stage.

The preparation stage may comprise providing a sample holding part 3, wherein the sample holding part sample holding part 3 comprises a collection chamber 100 having an interior space 101, especially wherein the interior space 101 hosts one or more single crystals of a porous framework 20. In embodiments, the one or more single crystals of the porous framework 20 may have a spherically equivalent diameter ≤ 10 µm. In further embodiments, the interior space 101 may further host a (first) solvent 10.

The loading stage may comprise providing the analyte 5 to the one or more single crystals of the porous framework 20. In particular, the loading stage may comprise loading the analyte 5 into the one or more single crystals of the porous framework 20. For instance, in embodiments, the loading stage may comprise soaking the one or more single crystals of the porous framework 20 in a second solvent 12 comprising the analyte 5, especially thereby providing a prepared sample 25. In particular, the prepared sample 25 may comprise the one or more single crystals of the porous framework 20 hosting the analyte 5.

The transfer stage may comprise functionally coupling an electron diffraction sample support 30 to the sample holding part 3, and bringing the one or more single crystals of the porous framework 20 in contact with the electron diffraction sample support 30. Especially, the transfer stage may comprise transferring the one or more single crystals of the porous framework 20 to the electron diffraction sample support 30.

In particular, in the depicted embodiment, the sample preparation method may comprise providing a prepared ED sample support 35 comprising a prepared sample 25.

In the depicted embodiment, the sample preparation method further comprises an evaporation stage. In particular, the evaporation stage comprises evaporating at least part of a solvent, especially (first) solvent 10, or especially the second solvent 12, from the one or more single crystals of the porous framework 20. Specifically, in the depicted embodiment, the evaporation stage comprises evaporating the solvent from the electron diffraction sample support 30.

In further embodiments, the sample preparation method may further comprise a cooling stage. The cooling stage may especially comprise (flash) cooling the prepared ED sample support 35 to a temperature selected from the range of -269 °C - -80 °C, especially with liquid nitrogen.

Fig. 2 schematically depicts an embodiment of the sample holding arrangement, wherein the sample holding part 3 and the connector part 4 are separate elements. In particular, in the depicted embodiment, the sample holding part 3 may comprise outer threading and the connector part 4 may comprise inner threading, wherein the sample holding part 3 and the connector part 4 are configured to physically couple via the outer and inner threading.

Further, in the depicted embodiment, the connector part 4 may comprise the tapering part 111, and the connector part 4 is configured to host the electron diffraction sample support 30.

Hence, Fig. 1-2 further schematically depict a use of the sample holder arrangement according to the invention for preparing a sample for electron diffraction analysis.

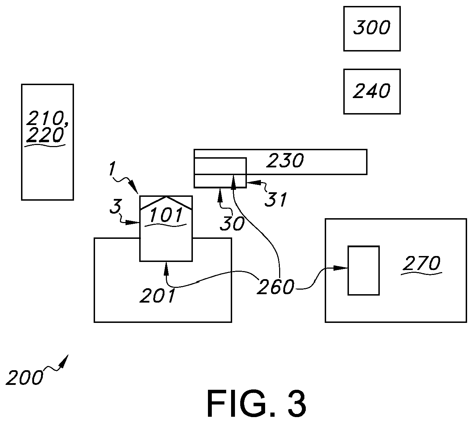

Fig. 3 schematically depicts an embodiment of the system 200 of the invention. In the depicted embodiment, the system comprises (i) a hosting element 201 configured for hosting a sample holding part 3, (ii) an analyte handling element 220 configured to provide an analyte 5 to the interior space 101 of the sample holding part 1, and (iii) a coupling element 230 configured to functionally couple the sample holding part 3 to an electron diffraction sample support 30. In the depicted embodiment, the hosting element 201 is depicted hosting a sample holding part 3, wherein the sample holding part 3 comprises a collection chamber 100 having an interior space 101. In particular, in the depicted embodiment, the interior space 101 is configured to host one or more single crystals of a porous framework 20, wherein the one or more single crystals of the porous framework 20 have a spherically equivalent diameter ≤ 10 µm, such as ≤ 1 µm.

In the depicted embodiment, the system 200 further comprises a solvent handling element 210, an evaporation element 240, a cooling element 260, an electron diffraction analysis unit 270, and a control system 300. In particular, the control system may be configured to control one or more elements of the system 200, especially one or more of the hosting element 201, the analyte handling element 220, the coupling element 230, the solvent handling element 210, the evaporation element 240, the cooling element 260, and the electron diffraction analysis unit 270.

In embodiments, the solvent handling element 210 may be configured to provide a solvent 10 to the interior space 101 of the sample holding part 3.

Especially, in further embodiments, the solvent handling element may be configured to provide a first solvent. In particular, the solvent handling element 210 may be configured to provide a (first) solvent 10 to the interior space 101, wherein the one or more single crystals of a porous framework 20 are immersed in the (first) solvent 10.

In further embodiments, the solvent handling element may be configured to provide a second solvent 12 to the interior space, wherein the second solvent 12 comprises the analyte 5. Hence, in embodiments, the analyte handling system 220 and the solvent handling system 210 may be the same system or may be functionally coupled

In embodiments, the electron diffraction analysis unit 270 may be configured to subject a prepared ED sample support 35 to electron diffraction analysis, and especially to provide an electron diffraction signal to the control system 300.

In further embodiments, the system 200, especially the control system 300, may have an operational mode. The operational mode may especially comprise one or more of a preparation stage, a loading stage, a transfer stage, an evaporation stage, a cooling stage, and an electron diffraction analysis stage, especially at least the preparation stage, the loading stage, and the transfer stage.

In embodiments, especially in the preparation stage, the hosting element 201 may (be configured to) host the sample holding part 3, especially wherein the interior space 101 hosts the one or more single crystals of the porous framework 20.

In further embodiments, especially in the loading stage, the analyte handling element 220 may (be configured to) provide the analyte 5 to the one or more single crystals of the porous framework 20. Alternatively or additionally, in embodiments, especially in the loading stage, the system 200, especially the analyte handling element 220, may (be configured to) soak the one or more single crystals of the porous framework 20 in a second solvent 12 comprising the analyte.

In further embodiments, especially in the transfer stage, the coupling element 230 may (be configured to) functionally couple the electron diffraction sample support 30 to the sample holding part 3, and especially (to) bring the one or more single crystals of the porous framework 20 in contact with the electron diffraction sample support 30.

In further embodiments, especially in the evaporation stage, the evaporation element 240 may (be configured to) evaporate at least part of a solvent from the one or more single crystals of the porous framework 20. For instance, the evaporation element 240 may be configured to control one or more of a pressure and or a temperature the one or more single crystals of the porous framework 20 are exposed to.

In further embodiments, especially in the cooling stage, the cooling element 260 may (be configured to) cool the prepared sample 25, especially the prepared ED sample support 35, to a temperature selected from the range of -269°C - -80 °C, especially with liquid nitrogen. In particular, the cooling element 260 may be configured to cool the prepared ED sample support 35 at multiple (other) elements, such as at the sample hosting element 201, at the analyte handling element 220, and at the electron diffraction unit 270. Hence, the system 200 may especially comprise a plurality of cooling elements 260 configured to cool the prepared sample 25.

In further embodiments, especially in the electron diffraction analysis stage, the electron diffraction analysis unit 270 may (be configured to) subject the prepared ED sample support 35 to electron diffraction analysis. Especially, in the electron diffraction analysis stage, the electron diffraction analysis unit may (be configured to) provide an electron diffraction signal to the control system 300.

Fig. 3 further schematically depicts an embodiment of the electron diffraction analysis method of the invention. Especially, the electron diffraction analysis method may comprises providing a prepared ED sample support 35, such as obtainable with the sample preparation method of the invention. In particular, in embodiments, the electron diffraction analysis method may comprise executing the sample preparation method of the invention. In further embodiments, the electron diffraction analysis method may comprise an electron diffraction analysis stage comprising subjecting the prepared ED sample support 35 to electron diffraction analysis to provide an electron diffraction signal.

In further embodiments, the electron diffraction analysis stage may especially comprise controlling a temperature of the prepared ED sample support 35 in the range of - 269°C - -80 °C.

The term "plurality" refers to two or more. Furthermore, the terms "a plurality of' and "a number of' may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" also includes embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment" and similar terms may refer to an embodiment comprising the features of the previously discussed embodiment, but may also refer to an alternative embodiment.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings. Moreover, if a method or an embodiment of the method is described being executed in a device, apparatus, or system, it will be understood that the device, apparatus, or system is suitable for or configured for (executing) the method or the embodiment of the method, respectively.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A sample holding arrangement (1) comprising a sample holding part (3) and a connector part (4), wherein:
- the sample holding part (3) comprises a collection chamber (100) having an interior space (101); wherein the interior space (101) hosts one or more single crystals of a porous framework (20); wherein the one or more single crystals of the porous framework (20) have a spherically equivalent diameter ≤ 10 µm; wherein the interior space (101) is configured for receiving an analyte (5); and
- the connector part (4) is configured to functionally couple to the sample holding part (3); wherein the connector part (4) is configured for functionally coupling the sample holding part (3) to an electron diffraction sample support (30), wherein the electron diffraction sample support (30) and the one or more single crystals of the porous framework (20) are in fluid contact when the sample holding part (3) and the electron diffraction sample support (30) are functionally coupled by the connector part (4).

2. The sample holding arrangement according to claim 1, wherein the sample holding arrangement (1) further comprises a removeable closing part (130), wherein the closing part (130) is configured to close the sample holding part (3), and wherein the closing part is selected from the group comprising a seal (132) and a cap.

3. The sample holding arrangement (1) according to any one of the preceding claims, wherein the interior space (101) comprises a solvent (10) selected from the group comprising hexane, cyclohexane, tetrahydrofuran, dimethylformamide, methanol and acetone, wherein the one or more single crystals of the porous framework (20) are immersed in the solvent (10).

4. The sample holding arrangement (1) according to any one of the preceding claims, wherein the connector part (4) comprises a tapering part (111), wherein the tapering part (111) is configured to taper towards the electron diffraction sample support (30).

5. The sample holding arrangement (1) according to any one of the preceding claims, wherein the collection chamber (100) comprises a material selected from the group comprising aluminum, glass, quartz, polyimide, polypropylene, polyethylene, polyvinylidene difluoride, polychloro-trifluoroethylene polymethylpentene, and polytetrafluoroethylene.

6. The sample holding arrangement (1) according to any one of the preceding claims, wherein the sample holding arrangement (1) further comprises an outer container (40) and an outer container closing part (50), wherein the outer container (40) comprises an outer container space (45), wherein the outer container (40) is configured to host the sample holding part (3) in the outer container space (45), and wherein the outer container closing part (50) is configured to close the outer container space (45), wherein the outer container closing part (50) comprises a septum (51).

7. The sample holding arrangement (1) according to any one of the preceding claims, wherein the sample holding arrangement (1) comprises the electron diffraction sample support (30).

8. A kit of parts (1000) comprising the sample holding arrangement (1) according to any one of the preceding claims and an electron diffraction sample support (30).

9. The kit of parts (1000) according to claim 8, wherein the electron diffraction sample support (30) comprise an ED grid (32) having a circularly equivalent grid diameter d_{g} selected from the range of 1 - 10 mm, wherein the connector part (4) is configured to provide an opening (120) between the sample holding part (3) and the electron diffraction sample support (30), wherein the opening (120) has a circularly equivalent opening diameter dₒ selected from the range of 0.9^{∗}d_{g} - 1.2^{∗}d_{g}, and wherein the electron diffraction sample support (30) comprises a plurality of grid holes, wherein the grid holes have circularly equivalent grid hole diameters dₕ selected from the range of 0.1 - 12 µm.

10. A sample preparation method for providing a prepared ED sample support (35), the sample preparation method comprising:
- a preparation stage comprising providing a sample holding part (3), wherein the sample holding part (3) comprises a collection chamber (100) having an interior space (101), wherein the interior space (101) hosts one or more single crystals of a porous framework (20), wherein the one or more single crystals of the porous framework (20) have a spherically equivalent diameter ≤ 10 µm;
- a loading stage comprising providing the analyte (5) to the one or more single crystals of the porous framework (20); and
- a transfer stage comprising bringing the one or more single crystals of the porous framework (20) in contact with an electron diffraction sample support (30);
thereby providing the prepared ED sample support (35).

11. The sample preparation method according to claim 10, wherein the sample preparation method further comprises:
- an evaporation stage comprising evaporating at least part of a solvent from the one or more single crystals of the porous framework (20).

12. The sample preparation method according to any one of the preceding claims, wherein the sample preparation method further comprises:
- a cooling stage comprising cooling the prepared ED sample support (35) to a temperature selected from the range of -269 °C - -80 °C.

13. The sample preparation method according to any one of the preceding claims 10-12, wherein the analyte comprises a biologically derived analyte.

14. The sample preparation method according to any one of the preceding claims 10-13, wherein the transfer stage comprises (i) functionally coupling the sample holding part (3) and the electron diffraction sample support (30) with a connector part (4), and (ii) transferring the single crystals of the porous framework (20) from the sample holding part (3) to the electron diffraction sample support (30) via the connector part (4).

15. An electron diffraction analysis method, wherein the electron diffraction analysis method comprises:
- providing a prepared ED sample support (35) obtainable by the sample preparation method according to any one of the preceding claims 10-14;
- an electron diffraction analysis stage comprising subjecting the prepared ED sample support (35) to electron diffraction analysis to provide an electron diffraction signal.

16. The electron diffraction analysis method according to claim 15, wherein the electron diffraction analysis stage comprises controlling a temperature of the prepared ED sample support (35) in the range of -269°C - -80 °C.

17. A system (200), wherein the system comprises (i) a hosting element (201) configured to host a sample holding part (3), (ii) an analyte handling element (220) configured to provide an analyte (5) to the interior space (101) of the sample holding part (1), (iii) a coupling element (230) configured to functionally couple the sample holding part (3) to an electron diffraction sample support (30), wherein the sample holding part (3) comprises a collection chamber (100) having an interior space (101), wherein the interior space (101) is configured to host one or more single crystals of a porous framework (20), wherein the one or more single crystals of the porous framework (20) have a spherically equivalent diameter ≤ 10 µm.

18. The system (200) according to claim 17, wherein the system further comprises an electron diffraction analysis unit (270) configured to subject a prepared ED sample support (35) to electron diffraction analysis.

19. The system (200) according to any one of the preceding claims 17-18, wherein the system (200) comprises a control system (300), wherein the control system is configured to control one or more of the analyte handling element (220), the coupling element (230), and the evaporation element (240) wherein the system (200) has an operational mode comprising:
- a preparation stage comprising the hosting element (201) hosting the sample holding part (3), wherein the interior space (101) hosts the one or more single crystals of the porous framework (20);
- a loading stage comprising the analyte handling element (220) providing the analyte (5) to the one or more single crystals of the porous framework (20);
- a transfer stage comprising the coupling element (230) functionally coupling the electron diffraction sample support (30) to the sample holding part (3), and bringing the one or more single crystals of the porous framework (20) in contact with the electron diffraction sample support (30);
thereby providing a prepared ED sample support (35).

20. The system according to claim 19, wherein the operational mode further comprises:
- an evaporation stage comprising the evaporation element (240) evaporating at least part of a solvent from the one or more single crystals of the porous framework (20).

21. The system (200) according to any one of the preceding claims 19-20, wherein the system further comprises a cooling element (260), and wherein the operational mode further comprises:
- a cooling stage comprising the cooling element (260) cooling the prepared ED sample support (35) to a temperature selected from the range of -269°C - -80 °C .

22. The system (200) according to claim 16 and any one of the preceding claims 19-21, wherein the operational mode further comprises:
- an electron diffraction analysis stage comprising the electron diffraction analysis unit (270) subjecting the prepared ED sample support (35) to electron diffraction analysis to provide an electron diffraction signal.
